Europäisches Patentamt

(19) European Patent Office

Office européen des brevets

(11) Numéro de publication: **0 080 232**
**B1**

(12) **FASCICULE DE BREVET EUROPEEN**

(45) Date de publication du fascicule du brevet: **18.03.87**

(21) Numéro de dépôt: **82201452.8**

(22) Date de dépôt: **17.11.82**

(51) Int. Cl.⁴: **H 01 Q 7/00**

(54) Procédé utilisé pour la gestion du trafic d'informations dans une cellule formée de plusieurs chaines radio et dispositif mettant en oeuvre ce procédé.

(30) Priorité: **20.11.81 FR 8121777**

(43) Date de publication de la demande:
**01.06.83 Bulletin 83/22**

(45) Mention de la délivrance du brevet:
**18.03.87 Bulletin 87/12**

(84) Etats contractants désignés:
**DE FR GB SE**

(56) Documents cités:
**FR-A-2 361 782**
**GB-A-2 063 011**
**US-A-4 028 500**
**US-A-4 199 662**

**ELECTRICAL COMMUNICATION, vol. 52, no. 3, 1977, pages 191-194, Londres (GB); G. CARDONA et al.: "Digital data transmission system for fixed and mobile subscribers".**

(73) Titulaire: **TELECOMMUNICATIONS RADIOELECTRIQUES ET TELEPHONIQUES T.R.T.**
**88, rue Brillat Savarin**
**F-75013 Paris (FR)**
㊷ **FR**

(73) Titulaire: **N.V. Philips' Gloeilampenfabrieken**
**Groenewoudseweg 1**
**NL-5621 BA Eindhoven (NL)**
㊷ **DE GB SE**

(72) Inventeur: **Flottes, Patrick**
**SOCIETE CIVILE S.P.I.D. 209 rue de l'Université**
**F-75007 Paris (FR)**
Inventeur: **Leclerc, Daniel**
**SOCIETE CIVILE S.P.I.D. 209 rue de l'Université**
**F-75007 Paris (FR)**

(74) Mandataire: **Charpail, François et al**
**Société Civile S.P.I.D. 209, rue de l'Université**
**F-75007 Paris (FR)**

# Description

L'invention concerne un procédé utilisé pour la gestion du trafic d'informations dans une cellule radio formée de plusieurs chaînes radio raccordant chacune des stations terminales à la station principale de la cellule par une voie montante et une voie descendante, ces deux voies pouvant transmettre des signalisations en même temps que du trafic d'informations, ce procédé étant destiné à donner depuis la station principale qui émet une signalisation $S_0$ dans la voie descendante de chaque chaîne radio dont la voie montante devient libre, l'autorisation d'utilisation de la voie montante de ladite chaîne radio à une station terminale parmi plusieurs pouvant demander cette autorisation et qui émettent par la voie montante des demandes d'utilisation de cette voie montante dans des fenêtres temporelles, la station principale recevant lesdites demandes et donnant à la station terminale dont la demande est une demande claire l'autorisation d'emprunter la voie montante.

Une telle cellule radio est utilisée par exemple pour couvrir une région et écouler du trafic téléphonique et informatique entre les stations terminales fixes ou mobiles de la cellule ou entre ces stations terminales et l'extérieur de la cellule, c'est-à-dire des stations terminales d'autres cellules ou une station centrale commune à plusieurs cellules.

Dans chaque chaîne radio d'une cellule, les informations sont transmises dans le sens des stations terminales vers la station principale de la cellule, généralement par l'intermédiaire d'une ou plusieurs stations relais, en utilisant plusieurs fréquences porteuses en cascade formant une voie montante. Inversement les informations sont transmises dans le sens de la station principale ves les stations terminales en utilisant plusieurs autres fréquences porteuses en cascade formant une voie descendante. Les communications des stations terminales d'une cellule entre elles et avec l'extérieur se font toujours par l'intermédiaire de la station principale de la cellule. Le rôle essentiel de la station principale est de gérer ces communications.

Un procédé de gestion du trafic d'informations dans une cellule formée de plusieurs chaînes radio est connu par exemple du brevet anglais No. 2 063 011. Selon ce procédé du même genre que celui décrit dans le préambule, l'émission des demandes d'utilisation de la voie montante est effectuée dans des fenêtres temporelles qui se suivent sans intervalle de temps et qui sont choisies de façon purement aléatoire. Il s'avère que la sélection d'une demande claire par ce procédé est d'autant plus difficile à obtenir que le nombre de stations terminales est plus élevé. Entre les étapes successives du processus de sélection, il n'y a pas en effet de réduction du nombre de stations terminales qui émettant des demandes d'autorisation d'emprunt de la voie montante d'une chaîne. Il risque donc de sa produire un effet de saturation qui empêche la sélection.

La présente invention fournit un procédé permettant de prévenir ce risque de saturation et de parvenir à la formulation d'une demande claire de façon plus efficace en utilisant comme seul critère de sélection les niveaux de priorité attribués aux trafics à écouler par les stations terminales.

Conformément à la l'invention lesdites demandes d'utilisation de la voie montante sont effectuées dans des fenêtres temporelles de *demande* affectées chacune à une niveau de priorité suivant un ordre de niveaux de priorité décroissants, la station principale qui analyse les signaux qu'elle reçoit dans les fenêtres de demande successives émettant une réponse quand au moins un signal est reçu dans une fenêtre de demande et ladite réponse étant émise dans une fenêtre temporelle de *réponse* suivant immédiatement ladite fenêtre de demande, sous forme d'une signalisation dépendant du signal reçu;

a.— si le signal reçu est une demande claire, la station principale émet une signalisation $S_3$ pour donner à la station terminale ayant émis la demande l'autorisation d'utiliser la voie montante;

b— si le signal reçu correspond à plusieurs demandes simultanées, la station principale émet une première signalisation $S_1$ qui bloque l'émission des demandes moins prioritaires et à la suite de laquelle est engagé un *processus de dichotomie;*

c— à chaque étape de ce processus de dichotomie la station principale émet dans une fenêtre de réponse une signalisation $S_1$, $S_2$ ou $S_3$ selon qu'elle détecte dans une fenêtre de demande un signal correspondant à plusieurs demandes simultanées, à une absence de demande ou à une demande claire; chaque station terminale recevant la signalisation $S_1$ ou $S_2$ en déduit successivement, selon un critère dépendant de chaque bit de son adresse et de la signalisation $S_1$ ou $S_2$ reçue, si une nouvelle demande doit être émise ou non dans une fenêtre de demande; quand une station terminale reçoit la signalisation $S_3$, après avoir demandé une autorisation, elle a l'autorisation d'utiliser la voie montante.

De préférence, le critère utilisé pour le processus de dichotomie consiste en ce que chaque station terminale recevant la signalisation $S_1$ ou $S_2$ compare successivement chaque bit de son adresse à un bit de comparaison ayant pour la première étape du processus une valeur déterminée et pour les étapes suivantes, selon la signalisation $S_1$ ou $S_2$ reçue, une valeur égale ou opposée à celle du bit de comparaison utilisé pour l'étape précédente, une nouvelle demande étant émise dans une fenêtre de demande si les deux bits comparés ont la même valeur (ou l'inverse).

Pour éviter complètement que certaines stations terminales ne soient favorisées ou défavorisées dans l'attribution d'une voie montante, il est avantageux que l'adresse des stations terminales utilisée dans le processus de dichotomie soit fournie par un tirage aléatoire effectué dans chaque station terminale au moment de la réception de la signalisation $S_0$.

Le procédé conforme à l'invention peut avantageusement être mis en oeuvre dans la station principale et les stations terminales par des dispositifs à microprocesseur.

Dans la station principale de la cellule, un dispositif associé à chaque chaîne radio peut comporter un microprocesseur qui, sous la commande d'un détecteur d'absence de signalisation $S_4$ dans la voie montante (la signalisation $S_4$ accompagnant toujours un signal d'information), commande un générateur de signalisations pour l'émission par la voie descendante de la signalisation $S_0$, qui ensuite, sous la commande d'un programme, analyse durant des fenêtres temporelles de demandes les signaux reçux véhiculés par la voie montante en comparant ces signaux avec des messages de demandes prédéterminés et qui enfin commande ledit générateur de signalisations pour l'émission par la voie descendante de l'une des signalisations $S_1$, $S_2$ ou $S_3$ selon le résultat de la comparaison, ou pour l'émission de la signalisation $S_0$.

La description suivante en regard des dessins annexés, le tout donné à titre d'exemple, fera bien comprendre comment l'invention peut être réalisée.

La figure 1 représente la structure d'une cellule radio dans laquelle on peut utiliser le procédé de l'invention.

La figure 2 montre le schéma d'un coupleur disposé dans la station principale d'une chaîne radio et convenant pour la mise en oeuvre du procédé de l'invention.

La figure 3 est un schéma représentant de façon simplifiée deux stations terminales de deux chaînes radio communiquant simultanément dans les deux sens par l'intermédiaire de la station principale de la cellule.

La figure 4 est un organigramme destiné à expliquer des étapes préalables au procédé de l'invention, dans le cas où une voie montante devient libre lors d'un trafic téléphonique.

La figure 5 est un diagramme montrant la répartition temporelle des fenêtres de demande et de réponse.

La figure 6 est un organigramme destiné à expliquer le procédé de l'invention.

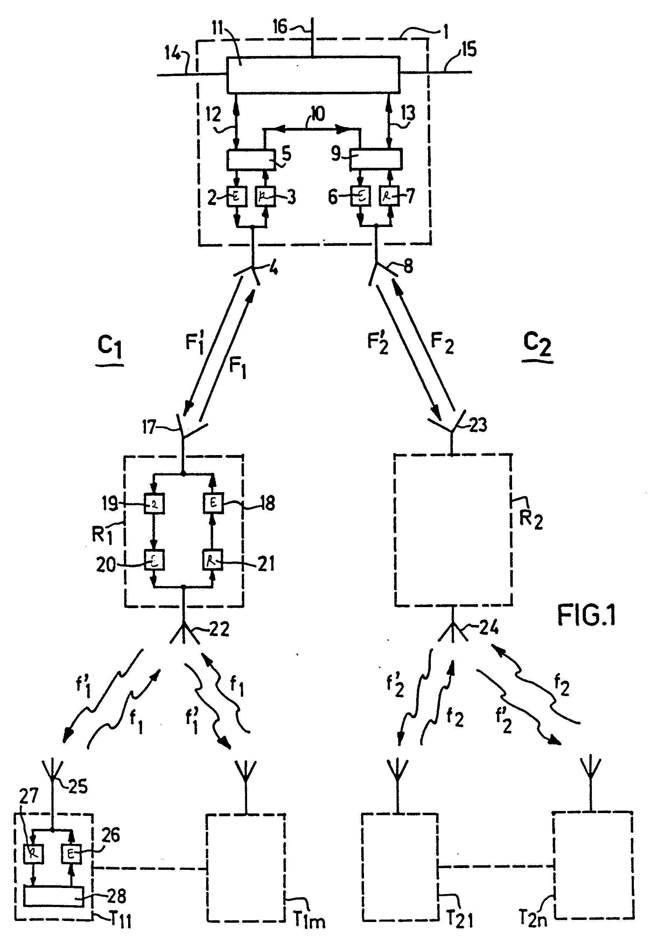

La figure 1 montre la structure générale d'une cellule radio d'un réseau de communication, dans laquelle on peut mettre en oeuvre le procédé de l'invention. Cette cellule radio destinée à couvrir une région comprend une station principale 1 qui est reliée par plusieurs chaînes radio à un certain nombre de stations terminales. Tout le trafic de ces stations terminales transite par la station principale. Celle-ci doit gérer le trafic téléphonique ou téléinformatique entre les stations terminales de la cellule et le trafic téléinformatique des stations terminales avec l'extérieur de la cellule. Pour simplifier, on n'a représenté que deux chaînes radio $C_1$ et $C_2$ qui desservent respectivement m stations terminales $T_{11}$ à $T_{1m}$ et n stations terminales $T_{21}$ à $T_{2n}$.

La station principale 1 comporte, en ce que concerne la chaîne radio $C_1$, un poste UHF formé d'un émetteur 2 et d'un récepteur 3 qui sont connectés d'un côté à une antenne directionnelle 4 pour fréquences UHF et de l'autre côté à un coupleur radio-automatisme 5. En ce qui concerne la chaîne radio $C_2$, la station principale 1 comporte les éléments 6 à 9, ayant respectivement les mêmes fonctions que les éléments 2 à 5 de la chaîne $C_1$. Dans le coupleur 5 et dans le coupleur 9 sont concentrés tous les moyens de gestion du trafic concernant respectivement les stations terminales de la chaîne $C_1$ et les stations terminales de la chaîne $C_2$. Les coupleurs 5 et 9 sont reliés directement par la liaison 10 par laquelle s'écoule le trafic téléphonique entre les stations terminales des deux chaînes. Les coupleurs 5 et 9 sont en outre reliés à un concentrateur 11 par les liaisons 12 et 13 par lesquelles s'écoulent respectivement les trafics téléinformatiques des deux chaînes radio $C_1$ et $C_2$. Le concentrateur 11 aiguille le trafic téléinformatique entre deux chaînes de la cellule, telles ce $C_1$ et $C_2$. Il aiguille aussi le trafic d'une chaîne de la cellule vers d'autres cellules ou vers un concentrateur de niveau hiérarchique supérieur à l'aide de liaisons par fil ou radio aboutissant à des bornes d'accès telles que 14, 15, 16.

Dans l'exemple simple représenté sur la figure 1, la chaîne radio $C_1$ comporte une station relais $R_1$ munie d'une antenne directionnelle 17 pour fréquences UHF, dirigée vers l'antenne 4 pour former une liaison dite technique avec la station principale. Dans la station relais $R_1$, l'antenne 17 est reliée à un poste UHF formé d'un émetteur 18 et d'un récepteur 19 dont les accès pour signaux basse-bréquence sont reliés à un poste VHF formé d'un émetteur 20 et d'un récepteur 21. Cet émetteur et ce récepteur sont connectés à une antenne omnidirectionnelle 22 pour fréquences VHF. La chaîne radio $C_2$ comporte également une station relais $R_2$ constituée de la même manière et munie d'une antenne directionelle 23 dirigée vers l'antenne 8 et d'une antenne omnidirectionnelle 24.

Les ondes émises par l'antenne omnidirectionnelle 22 de la station relais $R_1$ sont captées par les antennes des stations terminales $T_{11}$ à $T_{1m}$ de la chaîne radio $C_1$. La station terminale $T_{11}$ comporte par exemple une antenne 25 qui est connectée à un poste VHF formé d'un émetteur 26 et d'un récepteur 27. L'entrée basse fréquence de l'émetteur est connectée à un terminal 28, dans lequel on suppose incorporées des unités pouvant fournir des signaux de téléphonie ou des signaux de données modulées dans un modem pour être transmises dans la bande de fréquences des signaux de téléphonie. La sortie basse fréquence du récepteur 27 est également connectée au terminal 28 dans lequel on suppose incorporées des unités traitant et utilisant les signaux de téléphonie ou les signaux de données reçus. Les ondes émises par l'antenne omnidirectionnelle 24 de la station relais $R_2$ sont captées par les antennes des stations terminales $T_{21}$ à $T_{2n}$ de la chaîne radio $C_2$. Toutes les stations terminales sont constituées comme la station $T_{11}$ et comportent donc des terminaux pour émettre et recevoir des signaux de téléphonie ou de données.

On peut définir dans chaque chaîne une voie montante, permettant la transmission des signaux dans le sens des stations terminales vers la station principale et une voie descendante permettant la transmission des signaux dans le sens de la station principale vers les stations terminales. Dans le chaîne radio $C_1$, la voie montante a comme supports une fréquence porteuse $f_1$ transmise à un instant donné entre l'une quelconque des stations terminales $T_{11}$ à $T_{1m}$ et la station relais $R_1$ et une fréquence porteuse $F_1$ transmise entre cette station relais et la station principale. La voie descendante de la chaîne radio $C_1$ a comme supports une fréquence porteuse $F'_1$ transmise entre la station principale et la station relais $R_1$ et la fréquence porteuse $f'_1$ diffusée de la station relais $R_1$ pour être captée par les stations terminales $T_{11}$ à $T_{1m}$. La chaîne radio $C_2$ comporte également une voie montante et une voie descendante utilisant comme supports les ondes porteuses de fréquences $f_2$, $F_2$ et $f'_2$, $F'_2$, comme l'indique la figure. Il est clair que l'on pourrait aussi définir une voie montante et une voie descendante dans des chaînes radio ayant une structure plus compliquée que les chaînes $C_1$ et $C_2$ et pouvant comprendre par exemple plusieurs stations relais avec des liaisons techniques assurées par fil ou par radio.

Pour écouler le maximum de trafic dans le réseau de communication, il est évidemment souhaitable d'utiliser simultanément dans chaque chaîne radio la voie montante et la voie descendante, pour y transmettre simultanément en sens inverse deux signaux de données ou un signal de téléphonie et un signal de données. Mais il se pose des tâches difficiles d'organisation du trafic qui doit être entièrement effectuée depuis la station principale. En particulier, les trafics engendrés par les stations terminales doivent démarrer et s'arrêter sur ordre de la station principale. L'organisation du trafic est particulièrement difficile pendant une conversation téléphonique entre deux stations terminales de deux chaînes radio différentes, telles que $C_1$ et $C_2$. Pendant cette conversation, le sens de transmission des signaux téléphoniques change fréquemment, sous la dépendance des interlocuteurs et, dans chaque chaîne radio, alternativement la voie montante et la voie descendante sont libres, de façon non prévisible dans la station principale. Pour une bonne gestion, la station principale doit affecter rapidement une voie devenue libre à l'écoulement d'un trafic de données, sans perturber la conversation téléphonique. Lorsque dans une chaîne radio une voie descendante devient libre, il ne se pose pas de problème particulier dans la station principale pour y écoupler un trafic de données en direction d'une ou de plusieurs stations terminales. Par contre, lorsque c'est une voie montante qui devient libre, il se pose le problème de l'attribution de cette voie à une station terminale parmi plusieurs stations demandant à écouler un trafic de données en direction de la station principale: en particulier l'attribution de cette voie doit s'effectuer seulement sur la base du niveau de priorité du trafic à écouler, sans avantage aucune des stations ayant des trafics de même niveau de priorité.

La présente invention fournit un procédé permettant la gestion du trafic dans une cellule radio en résolvant notamment le problème de l'attribution d'une voie montante libre à une station terminale. Ce procédé utilise différentes signalisations qui peuvent être transmises par les voies de chaque chaîne radio, en même temps que les signaux d'information. Ces signalisations sont formées à l'aide de tons qui sont transmis dans une bande de fréquences dite supervision généralement contiguë à la bande de fréquences utilisée pour la transmission des signaux d'informations (signaux de téléphonie ou de données). Si la bande utilisée pour les signaux d'informations est la bande vocale s'étendant de 300 à 3000 Hz, on peut utiliser pour la supervision une bande infravocale s'étendant par exemple de 250 à 300 Hz ou une bande supravocale ou même une bande étroite dans la bande vocale.

Pour former les signalisations on peut utiliser par exemple 4 fréquences $F_{S1}$, $F_{S2}$, $F_{S3}$, $F_{S4}$ comprises entre 250 et 300 Hz. Les signalisations qui peuvent être envoyées par la station principale, en direction des stations terminales, c'est-à-dire par la voie descendante d'une chaîne radio, sont au nombre de quatre et appelées $S_0$, $S_1$, $S_2$, $S_3$. Chaque signalisation est formée de deux tons de 20 périodes chacun, émis consécutivement et ayant deux fréquences parmi les 4 fréquences $F_{S1}$ à $F_{S4}$.

D'une manière générale, la signification de ces signalisations est la suivante:

— La signalisation $S_0$ est envoyée aux terminaux pour leur indiquer que la voie montante de leur chaîne radio est libre.
— Les signalisations $S_1$ et $S_2$ sont utilisées pour la gestion des trafics et notamment, comme on l'expliquera par la suite, pour la sélection d'une station terminale demandant l'utilisation de la voie montante libre, après la réception de la signalisation $S_0$.
— La signalisation $S_3$ est envoyée à la station terminale sélectionnée pour lui donner l'autorisation d'envoyer son trafic par la voie montante.

Enfin il existe une signalisation $S_4$ constituée

par un ton ayant l'une des fréquences $F_{S1}$ à $F_{S4}$. Cette signalisation $S_4$ est émisse en permanence par la station principale ou une station terminale pendant que cette station utilise la voie montante ou la voie descendante pour écouler un trafic téléphonique ou un trafic de données. L'apparition et la disparition de cette signalisation $S_4$ permet donc de détecter les changements de sens de transmission du signal téléphonique et la fin des messages de données.

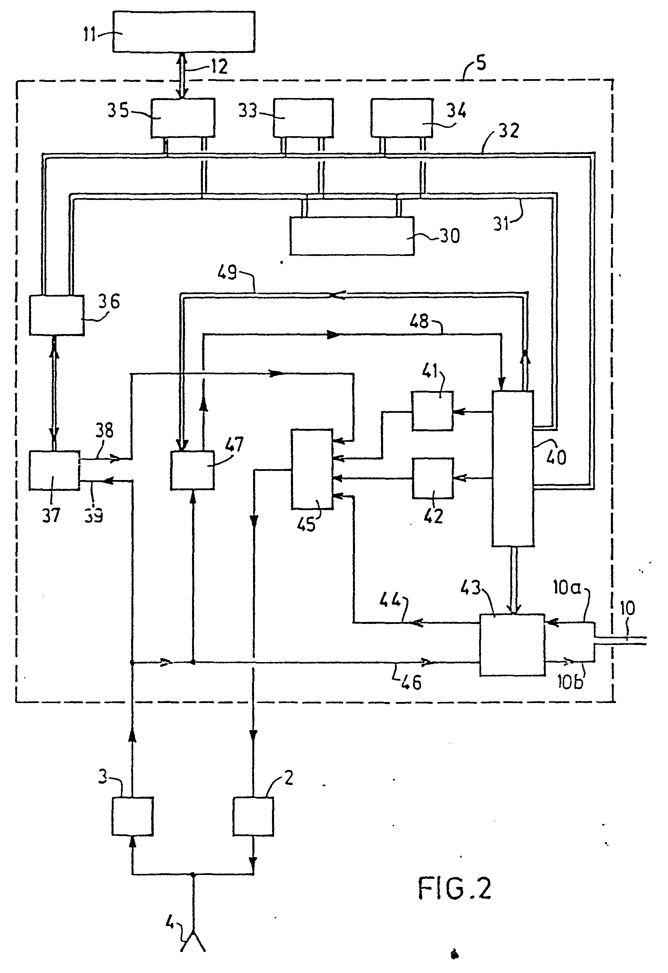

Pour mieux comprendre comment est organisé le trafic dans une chaîne radio telle que la chaîne $C_1$ en utilisant le procédé de l'invention, on a représenté sur la figure 2 la structure que peut revêtir le coupleur 5 de cette chaîne, en ne représentant que les éléments essentiels. Comme le montre la figure 2, ce coupleur est relié d'un côté au poste émetteur-récepteur formé par l'émetteur 2, le récepteur 3 et l'antenne 4. De l'autre côté, le coupleur est relié au concentrateur 11 par le bus de liaison 12, pour l'écoulement du trafic de données; enfin le coupleur 5 est relié à d'autres coupleurs identiques non représentés par une liaison référencée 10 comme sur la figure 1, pour l'écoulement du trafic téléphonique. Cette liaison 10 est composée d'un bus d'émission 10a, qui reçoit d'un autre coupleur un signal téléphonique à émettre par l'émetteur 2 et d'un bus de réception 10b qui transmet vers un autre coupleur un signal téléphonique reçu par le récepteur 3.

Dans le mode de réalisation représenté sur la figure, la gestion des trafics est effectuée sous la commande du microprocesseur 30. Ce dernier est connecté à un bus d'adresses 31 et un bus de données 32. La mémoire morte 33 et la mémoire vive 34 associées au microprocesseur sont connectées aux deux bus 31 et 32. A ces deux bus est également connecté un circuit d'interface 35 avec le concentrateur 11 et un circuit d'interface 36 avec le modem 37. Ce dernier peut recevoir des données provenant de l'extérieur de la chaîne radio par l'intermédiaire du concentrateur 11 et fournir sur sa sortie 38 un signal correspondant, modulé dans la bande de téléphonie; il peut recevoir sur son entrée 39 un tel signal modulé, en provenance du récepteur 3 et restituer des données à diriger vers l'extérieur de la chaîne par l'intermédiaire du concentrateur 11.

L'organisation du trafic au moyen des signalisations, la télécommande des stations terminales, la commutation des signaux téléphoniques sont effectuées sous la commande du microprocesseur 30 par l'intermédiaire du circuit d'interface de périphérie 40 qui est connecté aux deux bus 31 et 32. Le circuit d'interface 40 est relié à un générateur de signalisations 41, à un générateur de télécommande 42 et à une matrice de commutation 43. Sous la commande du microprocesseur 30, le générateur 41 peut fournir une signalisation $S_0$, $S_1$, $S_2$, $S_3$ ou $S_4$ et le générateur 42 peut fournir des séquences de test ou de télécommande (sous forme par exemple de tons dans la bande 300—3000 Hz) pour le contrôle des stations relais telles que $R_1$. Sous la commande

du microprocesseur 30, la matrice de commutation 43 peut recevoir par le bus d'émission 10a un signal téléphonique provenant d'un autre coupleur et l'aiguiller sur sa sortie 44. Ce signal téléphonique est appliqué au circuit sommateur 45, auquel peuvent être appliqués également, sous la commande du microprocesseur, des signalisations engendrées par le générateur 41, des séquences de test et de télécommande engendrées par le générateur 42, enfin des signaux de données modulés provenant de la sortie 38 du modem 37. Le signal de sortie du circuit sommateur 45 est appliqué comme signal de modulation à l'émetteur 2, les informations contenues dans ce signal étant alors transmises par la voie descendante de la chaîne radio. Par la voie montante de la chaîne radio, le récepteur 3 peut recevoir dans la bande de téléphonie, un signal de données ou un signal de téléphonie et dans la bande de supervision une signalisation $S_4$. Le signal fourni par ce récepteur est appliqué à l'entrée 39 du modem 37, à l'entrée 46 de la matrice de commutation 43, cette matrice aiguillant le signal de téléphonie via le bus de réception 10b, vers un autre coupleur, sous la commande du microprocesseur 30. Enfin le signal fourni par le récepteur 3 est appliqué à un détecteur 47 de signalisation $S_4$ dont l'information de sortie est fournie au microprocesseur 30 via la liaison 48 et le circuit d'interface 40. Le contenu de cette information de sortie du détecteur 47 dépend d'une programmation fournie par le microprocesseur 30 via le circuit d'interface 40 et le bus 49.

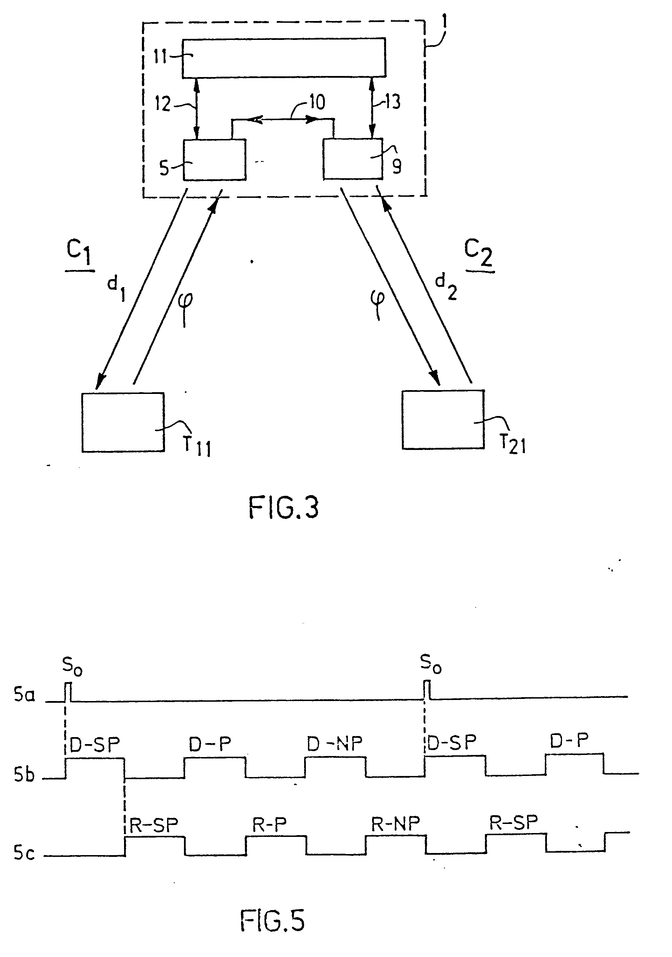

Le procédé de l'invention va être expliqué en partant de la situation d'une cellule radio schématiquement représentée sur la figure 3. Sur cette figure 3, on a représenté avec les mêmes références que sur la figure 1, la station principale 1 munie des coupleurs 5 et 9 des chaînes radio $C_1$ et $C_2$, ces coupleurs étant interconnectés par la liaison 10 pour l'écoulement du trafic téléphonique. Les coupleurs 5 et 9 sont en outre connectés par les liaisons 12 et 13 au concentrateur 11 pour l'écoulement du trafic de données. Le voies montantes et descendantes des deux chaînes $C_1$ et $C_2$ sont représentées par des traits fléchés. On considère deux stations terminales en liaison téléphonique, la station $T_{11}$ de la chaîne $C_1$ et la station $T_{21}$ de la chaîne $C_2$. On suppose qu'à un instant donné la transmission des signaux téléphoniques représentés par φ sur la figure se fait dans le sens utilisant la voie montante de la chaîne $C_1$ et la voie descendante de la chaîne $C_2$. A cet instant, la voie descendante de la chaîne $C_1$ est occupée par un signal de données $d_1$ et la voie montante de la chaîne $C_2$ est occupée par un signal de données $d_2$, généralement différent de $d_1$.

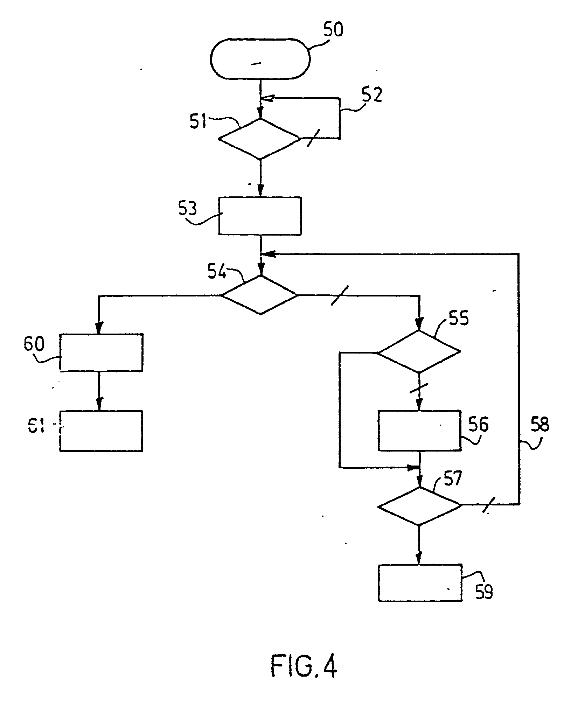

L'organigramme de la figure 4 représente le début de la procédure mise en oeuvre dans la station principale, pour l'utilisation optimale des deux voies de chaque radio, au cours de la conversation téléphonique. La case 50 représente pour la cellule radio, la situation initiale montrée sur la figure 3, pour laquelle notamment la voie montante de $C_1$ transmet de signaux téléphoniques φ et la signalisation $S_4$ accompagnant toujours un signal d'information. L'étape représentée par le case 51 est un test d'absence de la signalisation $S_4$, dans la voie montante de la chaîne $C_1$. Tant que cette absence de $S_4$ n'est pas constatée, il n'y a pas de retournement de téléphonie à envisager et la vérification continue: boucle se refermant par la liaison 52. Une absence de signalisation $S_4$ signifie la fin d'une transmission de téléphonie dans la voie montante et un retournement possible de la transmission téléphonique. Sous la commande des coupleurs 5 et 9, cette absence de signalisation $S_4$ entraîne dans l'étape représentée par la case 53, l'arrêt du trafic de connées $d_1$ dans la voie descendante de la chaîne $C_1$ et du trafic de données $d_2$ dans la voie montante de la chaîne $C_2$. Dans l'étape suivante représentée par la case 54, les coupleurs 5 et 9 effectuent un test de présence de signalisation $S_4$, l'un dans la voie montante de la chaîne $C_1$, l'autre dans la voie montante de la chaîne $C_2$.

Si la signalisation $S_4$ n'est nulle part présente, le processus se poursuit dans la branche de droite de la case 54, par une vérification dans la case 55 de l'activation d'une temporisation de fin de transmission téléphonique. Si cette vérification donne un résultat négatif, l'activation de la temporisation est effectuée dans la case 56 et l'on contrôle dans la case 57 si cette temporisation est échue. Si la vérification d'activation de temporisation dans la case 55 donne un résultat positif, on contrôle également dans la case 57 si la temporisation est échue. Tant que la temporisation n'est pas arrivée à échéance, les coupleurs 5 et 9 continuent à détecter la présence ou non de la signalisation $S_4$ dans l'une ou l'autre des voies montantes des deux chaînes: boucle se refermant par la liaison 58. Si la temporisation arrive à échéance, on passe à l'étape représentée par la case 59: l'absence de signalisation $S_4$ avant la fin de la temporisation indique qu'aucun des interlocuteurs initialement en conversation n'a repris la parole; un trafic de données est alors autorisé sur les voies montante et descendante des deux chaînes $C_1$ et $C_2$.

Si, pendant l'opération effectuée dans la case 54, la signalisation $S_4$ est détectée dans l'une ou l'autre des voies montantes des deux chaînes $C_1$ et $C_2$ le processus se poursuit dans la branche de gauche de cette case 54, par le désarmement dans la case 60, de la temporisation activée dans la case 56. Si la signalisation $S_4$ est détectée dans la chaîne $C_1$, cela signifie que la trafic téléphonique s'écoule comme représenté sur la figure 3 par la voie montante de la chaîne $C_1$ et la voie descendante de la chaîne $C_2$, la voie descendante de la voie $C_1$ et la voie montante de $C_2$ étant alors libres. Si la signalisation $S_4$ est détectée dans la chaîne $C_2$, cela signifie qu'il s'est produit un retournement de sens du trafic téléphonique et que la voie montante de $C_1$ et descendante de $C_2$ sont libres. Dans l'étape représentée par la case 61, un trafic de données est autorisé sur les voies libres des deux chaînes.

A l'issue des étapes représentées par les cases 59 et 61, chaque coupleur 5 ou 9 autorise un trafic de données sur la voie libre ou les deux voies libres de la chaîne qu'il commande. L'aiguillage d'un trafic de données par une voie descendante, vers une station terminale déterminée, ne pose pas de problème particulier. Par contre, plusieurs stations terminales peuvent demander en même temps d'utiliser une voie montante et il se pose le problème de sélection d'une station terminale, à effectuer depuis la station principale.

Cette sélection doit tenir compte seulement de niveaux de priorités attribués aux différents types de trafics possibles. On suppose par la suite que les stations terminales peuvent demander à émettre des messages de trois niveaux de priorité:

— Niveau SP ou superprioritaire
— Niveau P ou prioritaire
— Niveau NP ou non prioritaire.

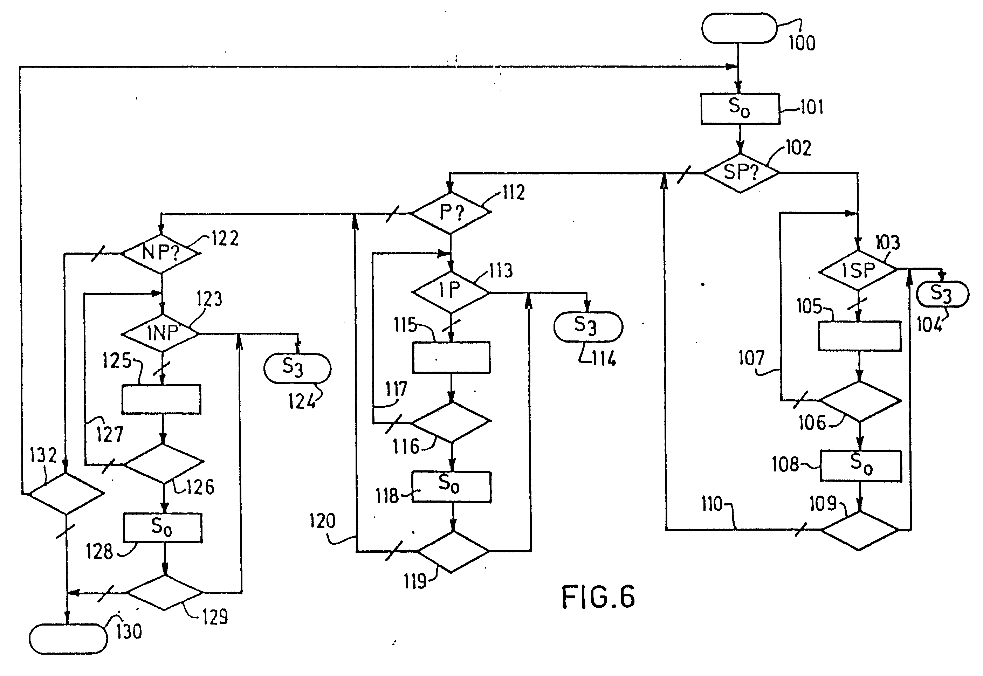

La sélection est effectuée à l'issue d'un dialogue entre la station principale et les stations terminales, les demandes et les réponses s'effectuant dans des fenêtres temporelles comme le montrent les diagrammes de la figure 5.

Le diagramme 5a montre plusieurs signalisations $S_0$, émises par la station principale d'une chaîne radio, sur la voie descendante de cette chaîne, pour indiquer aux stations terminales qu'elles ont la possibilité d'utiliser cette voie montante. Le diagramme 5b montre des fenêtres temporelles dans lesquelles les stations terminales peuvent émettre leurs demandes d'utilisation de la voie montante. La première fenêtre de demande D—SP suivant une signalisation $S_0$ peut être utilisée pour les demandes superprioritaires. La deuxième fenêtre de demande D—P suivant une signalisation $S_0$ peut être utilisée pour les demandes prioritaires. Enfin la troisième fenêtre de demande D—NP peut être utilisée pour les demandes non-prioritaires. Les demandes des stations terminales sont effectuées sous forme d'un message de données connu dans la station principale. Tant qu'au moins une demande n'a pas été détectée par la station principale dans l'une des fenêtres de demandes précitées, la station principale émet périodiquement la signalisation $S_0$, au maximum pendant une durée égale à un temps de maintien en éveil d'une chaîne radio.

Le diagramme 5c montre des fenêtres temporelles de réponses R—SP, R—P et R—NP suivant respectivement les fenêtres de demandes D—SP, D—P et D—NP, et utilisées par la station principale pour émettre des signalisations dans la voie descendante.

Quand la station principale détecte une seule demande dans l'une des fenêtres temporelles de demande D—SP, D—P ou D—NP elle en fait l'analyse et si cette demande est parfaitement claire (aucune erreur dans le message de demande), elle émet la signalisation $S_3$ dans la fenêtre temporelle de réponse R—SP, R—P ou R—NP suivant immédiatement la fenêtre temporelle de demande dans laquelle a été détectée la demande. Cette réponse sous forme de signalisation $S_3$ est interprétée par la station terminale ayant émis la demande, comme une autorisation d'utiliser la voie montante et par les autres stations terminales qui sont moins prioritaires comme une interdiction d'utiliser cette voie montante. La station terminale autorisée à émettre dans la voie montante reste encore au repos pendant un temps déterminé, afin de recevoir éventuellement une autre signalisation ($S_2$ par exemple) lui interdisant d'émettre. Passé ce délai d'attente de contrordre, si la station terminale n'a rien reçu, elle peut utiliser la voie montante pour émettre son trafic de données.

Quand, dans une fenêtre temporelle de demande D—SP, D—P ou D—NP, la station principale détecte une demande qui, après analyse, ne s'avère pas parfaitement claire, la station principale présume d'un conflit entre stations terminales ayant émis des demandes de même niveau de priorité et engage un processus de dichotomie basé sur l'adresse binaire des stations terminales pour attribuer la voie montante à l'une de ces stations terminales. Au cours de ce processus de dichotomie, qui ne concerne que des stations terminales de même niveau de priorité, les fenêtres temporelles de demande et de réponse ne sont pas différenciées et sont toutes utilisées pour résoudre le conflit.

Le processus de dichotomie proprement dit commence par une étape initiale pendant laquelle plusieurs stations terminales de même niveau de priorité émettent une demande et à l'issue de laquelle la station principale ayant détecté un conflit entre ces demandes émet une première signalisation $S_1$ en direction de ces stations terminales. Dans les étapes suivantes, la station principale émet soit la signalisation $S_1$ si elle détecte encore un conflit, soit la signalisation $S_2$ si elle ne détecte aucune demande. Le processus de dichotomie se termine lorsque la station principale ne reçoit plus qu'une seule demande de la part d'une station terminale; la station principale émet alors la signalisation $S_3$ qui, comme on l'a déjà expliqué, et interprétée par la dernière station terminale ayant fait une demande, comme une autorisation d'utiliser la voie montante.

Dans chaque station terminale concernée par le processus de dichotomie, s'effectuent successivement des comparaisons de chaque bit de l'adresse attribuée au terminal, à un bit de comparaison dont la valeur dépend de la signalisation $S_1$ ou $S_2$ reçue de la station principale. Une station terminale dont les deux bits comparés ont la même valeur émet une nouvelle demande et une station terminale dont les deux bits comparés ont une valeur différente n'émet aucune demande.

— Dans la première étape du processus de dichotomie, les stations terminales reçoivent la signalisation $S_1$ émise par la station principale à l'issue de l'étape initiale. Pour cette première étape, le bit de comparaison a par exemple la valeur fixe 1, de sorte qu'une station terminale dont le premier bit a pour valeur 1 émet une nouvelle demande, tandis qu'une station terminale dont le premier bit a la valeur 0 n'émet aucune demande.
— Dans la $n^{ième}$ étape du processus de dichotomie, les stations terminales reçoivent la signalisation $S_1$ ou $S_2$ émise par la station principale à l'issue de l'étape précédente. Le bit de comparaison utilisé dans cette $n^{ième}$ étape a la même valeur que le bit de comparaison de l'étape précédente si la signalisation reçue est $S_1$ et une valeur différente si la signalisation reçue est $S_2$. Dans cette $n^{ième}$ étape, seules émettent une nouvelle demande les stations terminales dont le $n^{ième}$ bit d'adresse a une certaine valeur tandis que les stations terminales dont le $n^{ième}$ bit d'adresse a l'autre valeur n'émettent aucune demande.

Comme les stations terminales ont toutes des adresses différentes, le processus que l'on vient de décrire aboutit forcément à ce qu'une seule station terminale émette une nouvelle demande, toutes les autres stations ayant été éliminées.

On va par exemple montrer comment s'applique ce processus à la sélection d'une station terminale, parmi deux stations terminales $T_1$ et $T_2$ ayant respectivement les adresses:

pour $T_1$: 1 1 1 0 0 0
pour $T_2$: 1 1 1 0 1 0

On utilise pour cette explication le tableau I ci-dessous:

TABLEAU I

| No. | Réception | $b_c$ | $b_{1a}$ | Emission | $b_{2a}$ | Emission | Réception | Emission |
|---|---|---|---|---|---|---|---|---|
| | | | **$T_1$** | | **$T_2$** | | **Station principale** | |
| 0 | $S_0$ | | | D | | D | Conflit | $S_1$ |
| 1 | $S_1$ | 1 | 1 | D | 1 | D | Conflit | $S_1$ |
| 2 | $S_1$ | 1 | 1 | D | 1 | D | Conflit | $S_1$ |
| 3 | $S_1$ | 1 | 1 | D | 1 | D | Conflit | $S_1$ |
| 4 | $S_1$ | 1 | 0 | N | 0 | N | Vide | $S_2$ |
| 5 | $S_2$ | 0 | 0 | D | 1 | N | Clair | $S_3$ |

La première colonne indique les numéros des étapes du processus de dichotomie. Dans les colonnes suivantes concernant les stations terminales, la colonne "Réception" indique la signalisation reçue à chaque étape, la colonne $b_c$ indique le bit de comparaison dépendant de la signalisation reçue; dans les deux colonnes concernant la station $T_1$, la colonne $b_{1a}$ indique le bit d'adresse comparé à chaque étape au bit de comparaison et la colonne "Emission" indique par la lettre D ou N si la station émet ou non une demande; dans les deux colonnes concernant la station $T_2$, les colonnes $b_{2a}$ et "Emission" ont des significations analogues. Dans les deux dernières colonnes concernant la station principale, la colonne "Réception" indique si la station détecte un *conflit*, une absence de demande *(vide)* ou une seule demande qui est *claire;* la dernière colonne "Emission" indique la signalisation $S_1$, $S_2$ ou $S_3$ émise par la station principale.

On voit sur le Tableau I, qu'à l'étape initiale 0, les stations terminales $T_1$ et $T_2$ reçoivent la signalisation $S_0$ et émettent une demande; il en résulte que la station principale détecte un conflit et émet la signalisations $S_1$. A l'étape 1, les stations terminales reçoivent la signalisation $S_1$; il en résulte que pour cette première étape le bit de comparaison $b_c$ vaut "1"; le premier bit d'adresse $b_{1a}$ et $b_{2a}$ des deux stations vaut "1" comme le bit de comparaison, de sorte que les deux stations émettent une demande; la station principale détecte un conflit et émet donc une signalisation $S_1$. A l'étape 2, comme la signalisation reçue est $S_1$, le bit de comparaison $b_c$ a la même valeur qu' à l'étape 1, c'est-à-dire qu'il vaut "1"; la comparaison du deuxième bit d'adresse des deux stations avec le bit de comparaison engendre finalement une demande de la part des deux stations; le conflit détecté par la station principale y engendre l'émission d'une signalisation $S_1$. L'étape 3 permet la comparaison du troisième bit d'adresse des deux stations et est identique à l'étape 2. A l'étape 4 la signalisation reçue dans les deux stations $T_1$ et $T_2$ est encore $S_1$ et le bit de comparaison $b_c$ vaut encore "1"; mais comme le quatrième bit d'adresse des deux stations vaut "0", et est donc différent du bit de comparaison, aucune des deux stations n'émet une demande; la station principale ne détectant aucune demande émet une signalisation $S_2$. A l'étape 5, la signalisation reçue dans les deux stations $T_1$ et $T_2$ étant $S_2$, le bit de comparaison $b_c$ a une valeur différente de celle du bit de comparaison de l'étape 4 et vaut donc "0"; puisque le cinquième bit d'adresse de la station $T_1$ vaut également "0" et que le cinquième bit de la station $T_2$ vaut "1", seule la station $T_1$ émet une demande; cette demande est clairement reçue par la station principale, qui émet une signalisation $S_3$ pour autoriser la station $T_1$ à utiliser la voie montante de la chaîne radio.

L'adresse des stations terminales utilisée dans le processus de dichotomie peut avoir un nombre de bits déterminé par le nombre total des stations du réseau de communications ou par le nombre plus réduit des stations terminales de chaque chaîne radio. Il est plus avantageux d'utiliser la deuxième solution dans laquelle l'adresse des terminaux a un nombre de bits plus faible, ce qui réduit le nombre d'étapes du processus de dichotomie et donc le temps nécessaire à la sélection d'une station. Mais en utilisant toujours la même adresse pour le processus de dichotomie, certaines stations terminales sont toujours avantagées lorsqu'elles rentrent en conflit avec d'autres; par exemple dans l'exemple décrit ci-dessus, si les stations terminales $T_1$ et $T_2$ entrent en conflit, la station terminale $T_2$ sera toujours éliminée. Une solution avantageuse à cet égard consiste à effectuer dans chaque station terminale, au moment de chaque réception de signalisation $S_0$, un tirage aléatoire pour attribuer à cette station une adresse dit de dichotomie, utilisée seulement pour le processus de dichotomie suivant cette signalisation $S_0$.

Il peut arriver qu'une processus de dichotomie soit perturbé par un brouillage dans la liaison entre les stations terminales et la station principale. Le signal brouillé reçu par la station principale est interprété par celle-ci comme un conflit entre stations terminales des sorte que la station principale émet pendant le temps du brouillage une signalisation $S_1$. Le système reste alors bloqué en dichotomie sur le niveau superprioritaire sans pouvoir sélectionner aucune station terminale tant que le brouillage est présent dans les fenêtres temporelles de ce même niveau de priorité. Pour sortir de cette situation il est avantageux que lorsque le nombre des étapes de dichotomie est atteint sans qu'une station ait été sélectionnée, une nouvelle signalisation $S_0$ soit émise par la station principale pour tenter de sélectionner une station terminale. Les étapes suivant l'émission de cette nouvelle signalisation $S_0$ seront mieux comprises à l'aide de la figure 6 qui représente un organigramme décrivant l'ensemble du processus mis en oeuvre dans la station principale d'une chaîne radio pour la sélection d'une station terminale, lorsque la voie montante de cette chaîne radio devient libre. Pour simplifier la description du processus fourni par cet organigramme, on n'indique pas les différents organes de la station principale mis en oeuvre à chaque étape du processus, ces organes pouvant aisément se déduire du schéma du coupleur de la station principale donné à la figure 2.

Sur la figure 6, la case 100 indique que la voie montante d'une chaîne radio est reconnue libre par la station principale, par exemple à la suite d'un retournement de trafic téléphonique, suivant le processus décrit à la figure 4. La case 101 indique que la station principale émet alors par la voie descendante la signalisation $S_0$. Dans l'étape suivante de la case 102, la station principale examine si un signal est reçu dans la fenêtre temporelle D—SP (voir figure 5) concernant les demandes superprioritaires. Si un signal est reçu dans la fenêtre D—SP, l'étape suivante représentée par la case 103, consiste à examiner si le signal est reçu de façon claire ou non. Si le signal reçu est clair, c'est qu'une seule demande superprioritaire a été émise; la station autorise alors le trafic demandé sur la voie montante (case 104) par l'émission de la signalisation $S_3$, comme on l'a déjà expliqué. Si le signal reçu n'est pas clair, la station principale présume que plusieurs demandes superprioritaires ont été émises et commence alors le processus de dichotomie décrit plus haut. Ce processus est représenté par une boucle comprenant, dans la branche de sortie négative de la case 103, la case 105 représentant une étape de dichotomie, la case 106 représentant une comparaison entre le nombre d'étapes de dichotomie effectuées et le nombre maximum d'étapes prévu. Tant que ce nombre maximum n'est pas atteint (liaison 107), on continue à vérifier à chaque étape de dichotomie si le signal reçu est clair ou non, ce qui doit dans les conditions normales de la liaison entre la station principale et les stations terminales, aboutir à l'autorisation de trafic pour une station terminale (case 104). Si le nombre maximum d'étapes de dichotomie est atteint, dans l'étape suivante représentée par la case 108, la station principale émet une nouvelle signalisation $S_0$. Dans l'étape représentée ensuite par la case 109, la station principale examine dans le fenêtre temporelle D—SP suivant la nouvelle signalisation $S_0$, si une demande forcément superprioritaire est reçue clairement. Si oui, la station principale autorise le trafic demandé sur la voie montante: case 104. Si non, la station principale présume un brouillage, rendant impossible l'attribution de la voie montante à un demandeur superprioritaire; pa liaison 110 indique alors que l'étape suivante est représentée par la case 112 dans laquelle est examiné si un signal est reçu dans la fenêtre temporelle D—P concernant les demandes prioritaires.

Cet examen dans une fenêtre de demandes prioritaires aurait pu aussi être effectué, après la première émission de la signalisation $S_0$ (case 101), si l'examen dans une fenêtre de demandes superprioritaires (case 102) n'avait révélé aucune demande. Le processus de traitement des demandes prioritaires est quasiment le même que celui des demandes superprioritaires. Ce processus est représenté par les cases 112 à 119 qui sont reliées entre elles de la même manière que les cases 102 à 109 et qui représentent les mêmes étapes, avec une seule différence concernant la case 119. Dans l'étape de la case 119, la station principale examine à la suite de l'émission de la signalisation $S_0$ dans l'étape 118, si une demande claire est reçue dans la fenêtre D—SP de demandes superprioritaires ou dans la fenêtre D—P de demandes prioritaires. Si oui, le trafic demande le premier par une demande clairement reçue est autorisé dans la voie montante: case 114. Si non la station principale présume d'un brouillage et l'étape suivante est représentée par la case 122 dans laquelle est examiné si un signal est reçu dans la fenêtre temporelle D—NP concernant les demandes non prioritaires.

Cet examen dans une fenêtre de demandes non prioritaires, aurait pu aussi être effectué si l'examen d'une fenêtre de demandes prioritaires (case 112) n'avait révélé aucune demande. Le processus de traitement des demandes non prioritaires est quasiment le même que celui des demandes superprioritaires et prioritaires. Il est représenté par les cases 122 à 129 reliées entre elles comme les cases 112 à 119 et représentant les mêmes étapes; toutefois dans l'étape de la case 129, la station principale examine si, à la suite de l'émission de la signalisation $S_0$ dans l'étape de la case 128, une demande claire est reçue dans le fenêtres des demandes superprioritaires, prioritaires ou non prioritaires. Si oui, le trafic demandé le premier par une demande clairement reçue est autorisé dans la voie montante: case 124. Si non, la station principale met en état de repos tous les organes de la chaîne radio contribuant à la mise en oeuvre du processus que l'on vient de décrire: case 130. Dans le cas où dans l'étape de la case 122, il s'avère qu'aucun signal n'est reçu dans une fenêtre de demandes non prioritaires, l'étape suivante est représentée par la case 132. Dans cette étape la station principale examine si la voie descendante est le siège d'un trafic. Si ou, on revient à l'étape représentée par la case 101 et on recommence le processus de recherche et de sélection d'une station terminale. Si non, puisque aucun trafic n'existe sur la voie descendante et n'est demandé sur la voie montante, la chaîne radio est mise à l'état de repos: case 130.

Le procédé de l'invention peut avantageusement être mis en oeuvre dans la station principale, en y utilisant un coupleur muni d'un microprocesseur du genre représenté sur la figure 2. Le spécialiste pourra comprendre aisément que toutes les étapes du procédé de l'invention schématisées par les organanigrammes des figures 4 et 6 peuvent être mises en oeuvre par le microprocesseur 30, sous la commande d'un programme stocké dans la mémoire morte 33. Ainsi le microprocesseur 30 peut engendrer des signaux de commande du générateur de signalisation 41 pour commander l'émission par l'émetteur 2 des signalisations $S_0$, $S_1$, $S_2$, $S_3$ ou $S_4$. Le microprocesseur 30 peut élaborer des fenêtres temporelles de demandes suivant l'émission d'une signalisation $S_0$ durant lesquelles il analyse les signaux lui parvenant via le récepteur 3, le modem 37 et le circuit d'interface 36. Par comparaison des signaux reçus avec des messages de demandes prédéterminés, le microprocesseur 30 peut décider si le signal reçu dans chaque fenêtre de demande correspond à une demande claire, à plusieurs demandes simultanées ou à une absence de demande. En fonction de cette décision le microprocesseur 30 peut commander le générateur de signalisation 41 pour que ce dernier engendre la signalisation convenable, dans une fenêtre temporelle de réponse suivant la fenêtre temporelle de demande dans laquelle le signal reçu a été analysé. Il est clair également que toutes les étapes de procédé de l'invention concernant les stations terminales pourraient y être mises en oeuvre par un microprocesseur.

**Revendications**

1. Procédé utilisé pour la gestion du trafic d'informations dans une cellule radio formée de plusieurs chaînes radio ($C_1$, $C_2$ ...) raccordant chacune des stations terminales ($T_{11}$, $T_{12}$, ... $T_{1m}$), ($T_{21}$, $T_{22}$, ... $T_{2n}$), ... à la station principale (1) de la cellule par une voie montante et une voie descendante, ces deux voies pouvant transmettre des signalisations en même temps que du trafic d'informations, ce procédé étant destiné à donner depuis la station principale qui émet une signalisation $S_0$ dans la voie descendante de chaque chaîne radio dont la voie montante devient libre, l'autorisation d'utilisation de la voie montente de ladite chaîne radio à une station terminale parmi plusieurs pouvant demander cette autorisation et qui émettent par la voie montante des demandes d'utilisation de cette voie montante dans des fenêtres temporelles, la station principale recevant lesdites demandes et donnant à la station terminale dont la demande est une demande claire l'autorisation d'emprunter la voie montante, caractérisé en ce que le trafic d'informations à écouler a plusieurs niveaux de priorité, lesdites demandes d'utilisation de la voie montante sont effectuées dans des fenêtres temporelles de *demande* (D—SP, D—P, D—NP) affectées chacune à un niveau de priorité suivant un ordre de niveau de priorité décroissants, la station principale qui analyse les signaux qu'elle recoit dans le fenêtres de demande successives émettant une réponse quand au moins un signal est reçu dans une fenêtre de demande et ladite réponse étant émise dans une fenêtre temporelle de *réponse* (R—SP ou R—P ou R—NP) suivant immédiatement ladite fenêtre de demande, sous forme d'une signalisation dépendant du signal reçu;

a— si le signal reçu est une demande claire, la station principale émet une signalisation $S_3$ pour donner à la station terminale ayant émis la demande l'autorisation d'utiliser la voie montante,

b— si le signal reçu correspond à plusieurs demandes simultanées, la station principale émet une première signalisation $S_1$ qui bloque l'émission des demandes moins prioritaires et à la suite de laquelle est engagé un processus de *dichotomie*;

c— à chaque étape de ce processus de dichotomie la station principale émet dans une fenêtre de réponse une signalisation $S_1$, $S_2$ ou $S_3$ selon qu'elle détecte dans une fenêtre de demande un signal correspondant à plusieurs demandes simultanées, à une absence de demande ou à une demande claire; chaque station terminale recevant la signalisation $S_1$ ou $S_2$ en déduit successivement, selon un critère dépendant de chaque bit de son adresse et de la signalisation $S_1$ ou $S_2$ reçue, si une nouvelle demande doit être émise ou non dans une fenêtre de demande; quand une station terminale reçoit la signalisation $S_3$, après avoir demandé une autorisation, elle a l'autorisation d'utiliser la voie montante.

2. Procédé selon la revendication 1, caractérisé en ce que ledit critère utilisé dans le processus de dichotomie consiste en ce que chaque station terminale recevant la signalisation $S_1$ ou $S_2$ compare successivement chaque bit de son adresse à un bit de comparaison ayant pour la première étape du processus une valeur déterminée et pour les étapes suivantes, selon la signalisation $S_1$ ou $S_2$ reçue, une valeur égale ou opposée à celle du bit de comparaison utilisé pour l'étape précédente, une nouvelle demande étant émise dans une fenêtre de demande si les deux bits comparés ont la même valeur (ou l'inverse).

3. Procédé selon la revendication 1 ou 2, caractérisé en ce que, lorsque le nombre d'étapes du processus de dichotomie engagé pour les demandes d'un certain niveau de priorité, dépasse une valeur maximale correspondant au nombre de bits d'adresse des stations terminales, la station principale émet une nouvelle signalisation $S_0$; les stations terminales ayant du trafic à écouler émettent des demandes; la station principale analyse les signaux reçus; si l'un des signaux reçus dans les fenêtres de demande de niveau de priorité supérieur ou égal audit niveau de priorité est une demande claire, la station principale émet une signalisation $S_3$ pour donner à la station terminale ayant émis la demande l'autorisation d'utiliser la voie montante; si aucun desdits signaux reçus n'est clair la station terminale analyse le signal reçu dans la fenêtre de demande correspondant au niveau de priorité immédiatement inférieur, le procédé se poursuivant suivant *a, b, c.*

4. Procédé selon l'une des revendications 1 à 3, caractérisé en ce que l'adresse des stations terminales utilisée dans le processus de dichotomie est fournie par un tirage aléatoire effectué dans chaque station terminale au moment de la réception de la signalisation $S_0$.

5. Procédé selon l'une des revendications 1 à 4, caractérisé en ce que les signalisations $S_0$ à $S_3$ sont transmises dans une bande de supervision située au-dessous ou au-dessus de la bande du signal d'information.

6. Procédé selon la revendication 5, caractérisé en ce que chacune des signalisations $S_0$ à $S_3$ est constituée par deux tons émis pendant une certaine durée et ayant des fréquences situées dans la bande de supervision.

7. Dispositif associé à chaque chaîne radio d'une cellule et mettant en ouvre dans la station principale le procédé selon l'une des revendications 1 à 6, caractérisé en ce qu'il comporte un microprocesseur (30) qui, sous la commande d'un détecteur d'absence de signalisation $S_4$ (47) dans la voie montante, commande un générateur de signalisation (41) pour l'émission par la voie descendante de la signalisation $S_0$, qui ensuite, sous la commande d'un programme, analyse durante des fenêtres temporelles de demandes (D—SP, D—P, D—NP) les signaux reçus véhiculés par la voie montante en comparant ces signaux avec des messages de demandes prédéterminés et qui enfin commande ledit générateur de signalisation (41) pour l'émission par la voie descendante de l'une des signalisations $S_1$, $S_2$ ou $S_3$ selon le résultat de la comparaison, ou pour l'émission de la signalisation $S_0$.

**Patentansprüche**

1. Verfahren zur Steuerung des Nachrichtenverkehrs in einer aus mehreren Funkkanälen ($C_1$, $C_2$ . . .) gebildeten Zelle, wobei die Kanäle jede der Endstellen ($T_{11}$, $T_{12}$, . . . $T_{1m}$), . . . mit der Hauptstelle (1) der Zelle verbindet und zwar mittels eines ansteigenden Kanals und eines abfallenden Kanals, wobei diese zwei Kanäle zusammen mit dem Informationsstrom Signalisierungselemente übertragen können, wobei mit diesem Verfahren beabsichtigt wird, von der Hauptstelle, die ein Signalisierungselement $S_0$ über den abfallenden Kanal jedes Funkkanals aussendet, dessen ansteigender Kanal frei wird, die Erlaubnis zu erhalten, den ansteigenden Kanal genannten Funkverbindung mit einer einer Anzahl Endstellen zu verwenden, die um diese Erlaubnis bitten können und die über den ansteigenden Kanal eine Anfragen aussenden, diesen ansteigenden Kanal in Zeitrahmen zu verwenden, wobei die Hauptstelle die genannten Anfragen erhält und der Endstelle, deren Anfrage fehlerfrei ist, die Erlaubnis erteilt, den ansteigenden Kanal zu benutzen, dadurch gekennzeichnet, dass der zu behandelnde Informationsstrom mehrere Prioritätspegel aufweist, die genannten Anfragen zur Verwendung des ansteigenden Kanals in den Anfragezeitrahmen (D—SP, D—P, D—NP) gemacht werden, die je einem Prioritätspegel zugeordnet sind entsprechend einer Rangordnung abhehmender Prioritätspegel, dass die Hauptstelle, welche die Signale analysiert, die sie innerhalb der aufeinanderfolgenden Anfragerahmen erhält, eine Antwort sendet, wenn in einem Abfragerahmen mindestens ein Signal erhalten wird, wobei diese Antwort in einem Antwortzeitrahmen (R—SP oder R—P oder R—NP) unmittelbar nach dem genannten Anfragerahmen gesendet wird und zwar in Form einer Signalisierung abhängig von dem empfangenen Signal;

a— wenn das empfangene Signal eine fehlerfreie Anfrage ist, sendet die Hauptstelle ein Signalisierungselement $S_3$ aus um der Endstelle, welche die Anfrage gesendet hat, die Erlaubnis zu erteilen, den ansteigenden Kanal zu verwenden,

b— wenn das empfangene Signal mehreren gleichzeitigen Anfragen entspricht, sendet die Hauptstelle ein erstes Signalisierungselement $S_1$ aus, welches das Aussenden von Anfragen mit einer geringeren Priorität sperrt, wonach ein eliminierendes Suchverfahren gestartet wird;

c— bei jedem Schritt dieses eliminierenden Suchverfahrens sendet die Hauptstelle in einem Antwortzeitrahmen ein Signalisierungselement $S_1$, $S_2$ oder $S_3$, je nachdem die Haupstelle in einem Anfragerahmen ein Signal detektiert, das mehreren gleichzeitigen Anfragen, einem Fehlen einer Anfrage oder einer fehlerfreien Anfrage entspricht; wobei jede Endstelle das nacheinander deduzierte Signalisierungselement $S_1$ oder $S_2$ erhält, und zwar entsprechend einem Kriterium anhängig von jedem Bit der Adresse und von dem empfangenen Signalisierrungselement $S_1$ oder $S_2$, ob in einem Anfragerahmen ggf. eine neue Anfrage gesendet werden muss; während, wenn eine Endstelle das Signalisierungselement $S_3$ erhält, nachdem sie um eine Erlaubnis gebeten hat, die Erlaubnis hat, den ansteigenden Kanal zu verwenden.

2. Verfahren nach Anspruch 1, dadurch gekennzeichnet, dass das genannte bei dem eliminierenden Suchverfahren benutzte Kriterium daraus besteht, dass jede Endstelle, die das Signalisierungselement $S_1$ oder $S_2$ erhält, nacheinander jedes Bit der Adresse mit einem Vergleichsbit vergleicht, das für den ersten Schritt des Verfahren einem bestimmten Wert hat und für die folgenden Schritte, entsprechend den erhaltenen Signalisierungselementen $S_1$ oder $S_2$, einen Wert gleich dem bzw. entgegengesetzt zu dem des für den vorhergehenden Schitt verwendeten Vergleichsbits, wobei in einem Anfragerahmen eine neue Anfrage gesendet wird, wenn die zwei verglichenen Bits denselben Wert (oder den Kehrwert) aufweisen.

3. Verfahren nach Anspruch 1 oder 2, dadurch gekennzeichnet, dass wenn die Anzahl Schritte des eliminierenden Suchverfahrens für die Anfragen mit einem bestimmten Prioritätspegel einen Maximalwert überschreitet, der der Anzahl Adressenbits der Endstellen entspricht, sendet die Hauptstelle ein neues Signalisierungselement $S_0$; dass die Endstellen, die einen Informationsstrom verarbeiten müssen, Anfragen senden; dass die Hauptstelle die empfangenen Signale analysiert; dass, wenn eines der in den Anfragerahmen erhaltenen Signale mit einem Superprioritätspegel oder mit einem Pegel entsprechend dem genannten Prioritätspegel eine fehlerfreie Anfrage ist, die Hauptstelle ein Signalisierungselement $S_3$ sendet um der Endstelle, welche die Anfrage gesendet hat, die Erlaubnis zum Verwenden des ansteigenden Kanals, zu erteilen; dass, wenn keines der erhaltenen Signal fehlerfrei ist, die Endstelle das innerhalb des Anfragerahmens erhaltene Signal, des dem unmittelbar niedrigeren Prioritätspegel entspricht, analysiert, wonach das Verfahren entsprechend a, b, c, fortgesetzt wird.

4. Verfahren nach einem der Ansprüche 1 bis 3, dadurch gekennzeichnet, dass die Adresse der Endstellen, die bei dem eliminierenden Suchverfahren verwendet wird, durch eine beliebige Selektion erhalten wird, die in jeder Endstelle zu dem Zeitpunkt, wo das Signalisierungselement $S_0$ erhalten wird, durchgeführt wird.

5. Verfahren nach Anspruch 1 bis 4, dadurch gekennzeichnet, dass die Signalisierungselemente $S_0$ bis $S_3$ in einem Überwachungsband gesendet werden, das unterhalb oder oberhalb des Bandes des Informationssignals liegt.

6. Verfahren nach Anspruch 5, dadurch gekennzeichnet, dass jedes der Signalisierungselemente $S_0$ bis $S_3$ durch zwei Töne gebildet wird, die während einer bestimmten Zeitperiode gesendet werden und Frequenzen aufweisen, die in dem Überwachungsband liegen.

7. Anordnung für jede Funkverbindung einer Zelle, wobei in der Hauptstelle das Verfahren nach einem der Ansprüche 1 bis 6 angewandt wird, dadurch gekennzeichnet, dass diese Anordnung einen Mikroprozessor (30) aufweist, der unter Ansteuerung eines Detektors (47), der das Fehlen eines Signalisierungselementes $S_4$ in dem ansteigenden Kanal detektiert, einen Signalisierungselementgenerator (41) steuert um über den abfallenden Kanal des Signalisierungselement $S_0$ zu senden, der danach, unter Ansteuerung eines Programms, während Anfragezeitrahmen (D—SP, D—P, D—NP) die empfangenen Signale analysiert, die über den ansteigenden Kanal verarbeitet wurden, indem diese Signal mit dem vorbestimmten Anfragen verglichen werden und der zum Schluss den genannten Signalisierungselementgenerator (41) steuert um uber den abfallenden Kanal eines der Signalisierungselemente $S_1$, $S_2$ oder $S_3$ zu senden und zwar abhängig von dem Vergleichsergebnis, oder um das Signalisierungselement $S_0$ zu senden.

**Claims**

1. A method of controlling the information stream in a radio cell formed by several radio links ($C_1$, $C_2$,...) connecting each one of the terminal stations ($T_{11}$, $T_{12}$,..., $T_{1m}$), ($T_{21}$, $T_{22}$,..., $T_{2n}$),... to the base station (1) of the cell *via* an upstream and a downstream channel, these two channels being capable of transmitting signalling elements together with the information stream, this method being intended to grant from the base station which transmits a signalling elements $S_0$ in the downstream channel of each radio link whose upstream channel becomes free, the authorization to use the upstream channel of said radio link to one of a plurality of terminal stations which can ask for this authorization and which transmit in the upstream channel requests in time frames to use this upstream channel, the base station receiving said requests and giving to the terminal station whose request is error-free the authorization to borrow the upstream channel, characterized in that the information stream to be conveyed has several priority levels, said requests to use the upstream channel are made in the *call* time frames (D—SP, D—P, D—NP) each one assigned to a priority level subsequent to a lower order priority level, the base station which analyzes the signals it receives in the successive call time frames transmitting an answer when at least one signal is received in a call time frame and said answer transmitted in an *answer* time frame (R—SP or R—P or R—NP) immediately following said call time frame in the form of a signalling depending on the received signal;

a— if the received signal is an error-free request, the base station transmits a signalling element $S_3$ to grant the authorization to use the upstream channel to the terminal station that has transmitted the request,

b— if the received signal corresponds to several simultaneous requests, the base station transmits a first signalling element $S_1$ block-

ing the transmission of the requests having less priority and after which a *dichotomy* process is started;

c— at each stage of this dichotomy process the base station transmits in an answer time frame a signalling element $S_1$, $S_2$ or $S_3$ according as it detects in a call time frame a signal corresponding to several simultaneous requests, to an absence of request or to an error-free request; each terminal station receiving the successively deducted signalling element $S_1$ or $S_2$, according to a criterion depending on each bit of its address and the received signalling element $S_1$ or $S_2$, whether or not a new request has to be transmitted in a call time frame; when a terminal station receives the signalling element $S_3$, after having requested an authorization, it has the authorization to use the upstream channel.

2. A method as claimed in Claim 1, characterized in that the said criterion used in the dichotomy process consists in that each terminal station receiving the signalling element $S_1$ or $S_2$ successively compares each bit of its address with a comparison bit having for the first stage of the process a given value and for the following stages, according to the received signalling elements $S_1$ or $S_2$, a value equal or opposite to that of the comparison bit used for the preceding stage, a new request being transmitted in a call time frame if the two compared bits have the same value (or inverse values).

3. A method as claimed in Claim 1 or 2, characterized in that, when the number of stages of the dichotomy process for the requests of a certain priority level exceeds a maximum value corresponding to the number of address bits of the terminal stations, the base station transmits a new signalling element $S_0$; the terminal stations having an information stream to be conveyed transmits requests; the base station analyzes the received signals; if one of the signals received in the call time frames of a superpriority level or of a level equal to the said priority level is an error-frre request, the base station transmits a signalling element $S_3$ to authorize the terminal station which has transmitted the request to use the upstream channel; if none of the received signals is error-free the terminal station analyzes the signal received in the call time frame corresponding to the immediately lower priority level and the procedure is continued in accordance with a, b, c.

4. A method as claimed in any one of Claims 1 to 3, characterized in that the address of the terminal stations used in the dichotomy process is supplied by a random selection made in each terminal station at the instant of at which signalling element $S_0$ is received.

5. A method as claimed in any one of the Claims 1 to 4, characterized in that the signalling elements $S_0$ to $S_3$ are transmitted in a supervision band situated below or above the band of the information signal.

6. A method as claimed in Claim 5, characterized in that each of the signalling elements $S_0$ to $S_3$ is formed by two tones transmitted during a certain period of time and having frequencies situated in the supervisory band.

7. An arrangement associated with each radio link of a radio cell and using in the base station the method as claimed in any one of the Claims 1 to 6, characterized in that it comprises a microprocessor (30) which, under the control of a signalling absence detector $S_4$ (47) included in the upstream channel, controls a signal generator (41) for transmitting in the downstream channel the signalling element $S_0$, which subsequently, controlled by a program, analyzes during the call time frames (D—SP, S—P, S—NP) the received signals conveyed through the upstream channel while comparing these signals with the predetermined requests and which finally controls the said signal generator (41) for transmitting in the downstream channel one of the signalling elements $S_1$, $S_2$, $S_3$ depending on the result of the comparison, or for transmitting the signalling element $S_0$.

FIG.1

FIG.2

**0 080 232**

FIG.3

FIG.5

3

FIG.4

FIG.6